# EUROPEAN PATENT SPECIFICATION

(11) **EP 0 376 382 B1**
(45) Date of publication and mention of the grant of the patent: **30.06.1993**
(21) Application number: 89203244.2
(22) Date of filing: 18.12.1989
(51) Int. Cl.: B65G 47/61

(54) **Sorting installation provided with moving suspension claws which can be operated from two sides**
Sortieranlage, welche mit sich bewegenden Hängeklauen ausgestattet ist, welche von zwei Seiten betätigbar sind
Installation de triage équipée de griffes de suspension mobiles qui peut être actionnée des deux côtés

(30) Priority: 22.12.1988 NL 8803144
(43) Date of publication of application: 04.07.1990
(73) Proprietor: PROMECH SORTING SYSTEMS B.V., 2031 CW Haarlem (NL)
(72) Inventor: Geerts, Johannes Gerhardus Christianus, NL 2116 VH BENTVELD (NL)
(74) Representative: Mathol, Heimen, Ir.

(56) References cited:
- EP-A- 0 307 045
- NL-A- 7 008 371

## Description

The invention relates to an installation for sorting articles, for example articles of clothing, which are each carried by a hook-shaped hanger, which installation is made up of a driven continuous conveyor, such as a cable or chain, which traverses a closed track along which a number of ejection stations are installed, claws in which a hanger can be taken up being attached at regular intervals to said conveyor and each claw being constructed with an operating lever for opening the claw, for which purpose each ejection station is provided with a cam face which can be engaged for interaction with the operating lever of a passing claw. An installation of this type is disclosed in Applicant's earlier Patent Application NL 7008371.

This known sorting installation has a capacity which is directly related to, on the one hand, the speed of the conveyor and, on the other hand, the mutual spacing between the ejection stations. However, it is not possible to increase the capacity of the sorting installation by simply allowing the speed of movement of the conveyor to increase since the articles are subject to the influence of air resistance and an increase in the speed causes the suspended articles to assume a sloping position. Moreover, the mutual spacing of the ejection stations cannot be reduced to below a certain minimum since otherwise an unimpeded ejection of the articles is no longer guaranteed.

The aim of the invention is to provide an installation in which an increase in the sorting capacity is nevertheless achievable without an increase in the transport speed. In the installation in question this is achieved in that the operating levers of successive claws are directed alternately to the left and to the right side of the track and in that each ejection station is provided with two cam faces which are located opposite to one another and can be engaged independently and between which the conveyor with the claws moves. By means of these measures both the mutual spacing of the claws and the distance between successive ejection stations can be reduced without a risk of hindrance during sorting. In this connection it is also pointed out that it is not possible to provide each claw with both a left and a right operating lever because a greater mutual distance between successive ejection stations is then necessary to prevent hindrance in the functioning of the claws.

In an advantageous embodiment of the proposed new installation, the mutual spacing of the claws on the conveyor is smaller than the length of a cam face which can be engaged. It is thus possible within a restricted space to deliver the supplied articles at a high rate in the sorted state to the chosen ejection stations.

The invention will be explained in more detail with the aid of the drawing which shows an embodiment of the envisaged sorting installation.

Fig. 1 is a highly schematic plan view of a sorting installation provided with a number of ejection stations.

Fig. 2 is a greatly enlarged side view of a work station indicated by an arrow II in Fig. 1.

Fig. 3 is a section along the line III-III in Fig. 2.

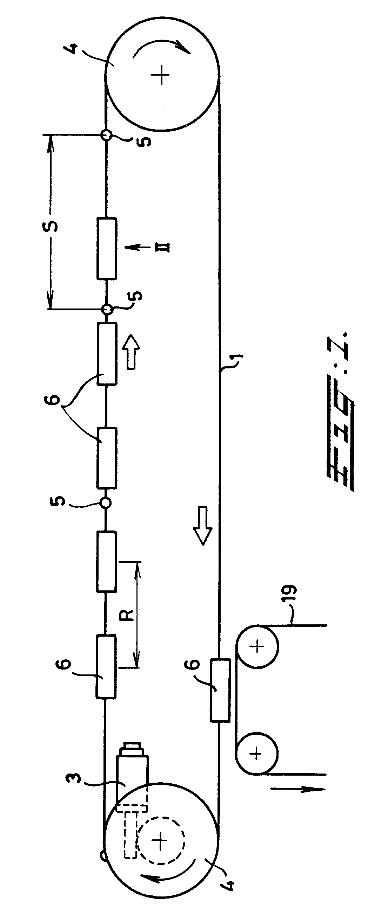

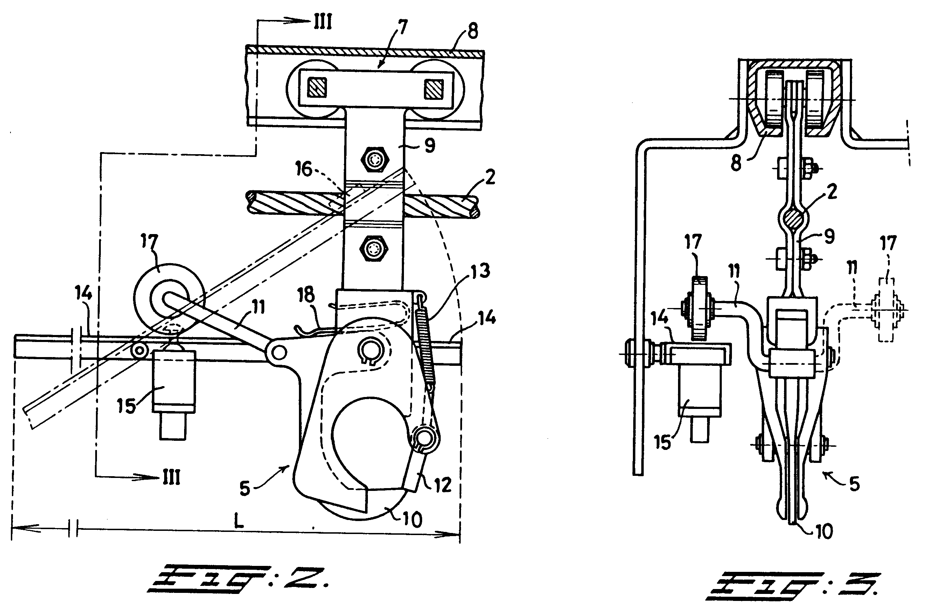

The sorting installation, of which the most important parts can be seen in Figures 1 and 2, is made up of a conveyor 1 which, in a manner as disclosed in Netherlands Patent Application 7008371, consists of a continuous conveyor element 2 such as a cable or chain, provided with a drive 3. The continuous conveyor element 2 traverses a closed track employing two reversing wheels 4. The conveyor element 2 is provided at regular intervals with a claw 5 which can be actuated and in which a hook-shaped hanger (for example of the clothes hanger type) can be taken up. Along the said track of the conveyor 1 there are a number of ejection stations 6 which can be actuated by the passing articles or hangers to open the relevant claw and eject the hanger with the article.

This is effected by providing each hanger or article with a code, while a reader for this code is installed in each ejection station. The various features, although being described in said earlier Patent Application NL 7008371, are also known from US Patent 3,842,744 granted to Willem LEYZERS VIS . A computer comprising an appropriate program gives a correct magnetic code to every passing article, after having received instructions from an operator feeding the articles to the sorting installation. This code is determining the station 6 at which the article (with its hanger) is ejected for further delivery. The passing of the magnetic code along the reader of the concerning station 6 energizes this station as will hereafter be described.

Each claw 5 is suspended from a trolley 7 which is guided in a tube profile 8, which is in the form of a reverse U and is provided with a slot in the lower wall to allow the passage of the suspension 9 between the trolley 7 and the claw 5. The conveyor element (the cable 2) is also clamped in this suspension 9. Each claw is provided with a bottommost hook 10 which can be turned away with the aid of an operating lever 11. The access to the claw 5 is closed by a lip 12 which can hinge inwards against the force of a draw spring 13. A tiltable cam face 14, which is horizontal in the rest position (see Fig. 2), is located in each ejection station 6. When the reader in the ejection station 6 receives a signal that a hanger or article has been taken up in an approaching claw 5, a pneumatic ram 15 comes into operation, so that the cam face 14 comes into the sloping position indicated by the broken line. The cam face 14 is held in this position by a holding magnet 16. A pulley 17 on the end of the operating lever 11 normally moves over the horizontal cam face 14.

When the claw 5, from which the article must be ejected, passes, the pulley 17 of the operating lever 11 comes into contact with the cam face 14 which is in the sloping position. As a consequence the operating lever 11 is moved upwards and in this way opens the lowermost hook 10 of the claw 5. By this means the claw opens and the hanger, with the article, is ejected as a result of gravity. The tilting of the lever 11 is restricted, so that during the further movement of the claw 5 the pulley 17 pulls the cam face 14 away from the holding magnet 16. As a result the came face 14 tilts back into its horizontal position. The claw 5 also closes because the lowermost hook 10 is moved back by a compression spring 18 into its closed position. To this extent the functioning of the sorting installation is in accordance with the description given in the cited earlier Patent Application NL 7008371.

The present sorting installation differs in that each operating lever 11 is not always (as is customary) fitted on the same side of the claws 5, but that these levers are directed alternately to the left and to the right side of the track for successive claws 5 (see Fig. 3). This also means that each ejection station 6 is provided with two cam faces 14 which are located opposite one another and can be engaged independently and between which the conveyor 1 with the claws 5 moves. The magnetic code given by the operator through the computer to the concerning article, will at the same time take into consideration the position of the operating lever 11 either at the left or at the right of the claw 5. Consequently the correct cam face 14 will be pushed by its pneumatic ram 15, leaving the opposite cam face 14 in its horizontal rest position.

This alternate positioning of the operating levers 11 on the left and on the right side of successive claws has the advantage that both the mutual spacing of successive claws 5 in the conveyor 1 and the mutual distance between successive ejection stations 6 can be made smaller than was possible hitherto. This limitation in the conventional sorting installation is caused by the necessary length L of each tiltable cam face 14. As a consequence of the alternate positioning of the operating levers 11, the spacing S between two successive claws 5, and also the mutual spacing R of the ejection stations 6, can be made smaller without there being a risk of undesired contact between a pulley 17 and a cam face 14. As a consequence, a more compact arrangement and thus a greater capacity can be obtained within a given space.

It is pointed out that a secondary conveyor 19 is also shown in Fig. 1, which facility is part of the related Patent Application NL 8803044.

## Claims

1. Installation for sorting articles, for example articles of clothing, which are each carried by a hook-shaped hanger, which installation is made up of a driven continuous conveyor (2), such as a cable or chain, which traverses a closed track along which a number of ejection stations (6) are installed, claws (5) in which a hanger can be taken up being attached at regular intervals to said conveyor (2) and each claw (5) being constructed with an operating lever (11) for opening the claw (5), for which purpose each ejection station (6) is provided with a cam face (14) which can be engaged for interaction with the operating lever (11) of a passing claw (5), characterized in that the operating levers (11) of successive claws (5) are directed alternately to the left and to the right side of the track and in that each ejection station (6) is provided with two cam faces (14) which are located opposite to one another and can be engaged independently and between which the conveyor (1) with the claws moves.

2. Installation according to Claim 1, characterized in that the mutual spacing (S) of the claws (5) on the conveyor (1) is smaller than the length (L) of a cam face (14) which can be engaged.

## Patentansprüche

1. Anlage zum Sortieren von Gegenständen, beispielsweise Kleidungsstücken, die jeweils durch eine hakenförmige Hängeeinrichtung getragen werden, welche Anlage besteht aus einer angetriebenen durchgehenden Fördereinrichtung (2) wie einem Seil oder einer Kette besteht, die eine geschlossene Bahn durchquert , entlang der eine Anzahl von Auswerferstationen (6) eingerichtet ist, Klauen (5), in denen eine Hängeeinrichtung aufgenommen werden kann, wobei sie in regelmäßigen Abständen an der Fördereinrichtung (2) angebracht sind, und wobei jede Klaue (5) mit einem Betätigungshebel (11) zum Öffnen der Klaue (5) ausgeführt ist, zu welchem Zweck jede Auswerferstation (6) mit einer Nockenseite (14) versehen ist, die zur Wechselwirkung mit dem Betätigungshebel (11) einer vorbeilaufenden Klaue (5) in Eingriff gebracht werden kann, dadurch **gekennzeichnet**, daß die Betätigungshebel (11) aufeinanderfolgender Klauen (5) abwechselnd zur linken und zur rechten Seite der Bahn gerichtet sind und daß jede Auswerferstation (6) mit zwei Nockenseiten (14) versehen ist, die sich einander gegenüberliegend befinden und die unabhängig in Eingriff gebracht werden können und zwischen denen sich die Fördereinrichtung (1) mit den Klauen bewegt.

2. Anlage nach Anspruch 1, dadurch **gekennzeichnet**, daß der wechselseitige Abstand (S) der Klauen (5) auf der Fördereinrichtung (1) kleiner als die Länge (L) einer Nockenseite (14) ist, mit der in Eingriff getreten werden kann.

## Revendications

1. Installation de tri d'articles, par exemple des articles vestimentaires, qui sont respectivement portés par un élément de suspension en forme de crochet, cette installation consistant en un convoyeur continu entraîné (2), tel qu'un câble ou une chaîne qui parcourt un chemin fermé le long duquel un certain nombre de stations d'éjection (6) sont installées, des griffes (5) auxquelles un élément de suspension peut être accroché étant fixées à intervalles réguliers sur le convoyeur (2), chaque griffe (5) comportant un levier d'actionnement (11) pour ouvrir la griffe (5), chaque station d'éjection (6) comportant dans ce but une face de came (14) qui peut venir en contact avec le levier d'actionnement (11) d'une griffe (5) qui passe, pour interagir avec ce levier, caractérisée en ce que les leviers d'actionnement (11) de griffes successives (5) sont dirigés alternativement du côté gauche et du côté droit du chemin, et en ce que chaque station d'éjection (6) comporte deux faces de came (14) qui sont disposées face à face, avec lesquelles les leviers peuvent venir en contact indépendamment, et entre lesquelles se déplace le convoyeur (1) avec les griffes.

2. Installation selon la revendication 1, caractérisée en ce que l'écartement mutuel (S) des griffes (5) sur le convoyeur (1) est inférieur à la longueur (L) d'une face de came (14) avec laquelle un levier d'actionnement peut venir en contact.
